(19) Europäisches Patentamt / European Patent Office / Office européen des brevets

(11) **EP 2 832 799 A1**

(12) **EUROPEAN PATENT APPLICATION**
published in accordance with Art. 153(4) EPC

(43) Date of publication:
**04.02.2015 Bulletin 2015/06**

(51) Int Cl.:
*C08L 101/00* (2006.01)  *C08J 3/12* (2006.01)
*C08J 5/04* (2006.01)  *C08K 7/14* (2006.01)
*C08L 97/00* (2006.01)

(21) Application number: **13801393.3**

(22) Date of filing: **21.05.2013**

(86) International application number:
**PCT/JP2013/064058**

(87) International publication number:
**WO 2013/183440 (12.12.2013 Gazette 2013/50)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.06.2012 JP 2012127782
21.06.2012 JP 2012139401**

(71) Applicant: **Toyota Shatai Kabushiki Kaisha
Kariya-shi
Aichi 448-0002 (JP)**

(72) Inventor: **The designation of the inventor has not
yet been filed**

(74) Representative: **Thurston, Joanna
Withers & Rogers LLP
4 More London Riverside
London SE1 2AU (GB)**

(54) **THERMOPLASTIC RESIN COMPOSITION**

(57) A thermoplastic resin composition may contain plant fine powders that are kicked up when a plant is pulverized. Such plant fine powders have an average particle diameter of 20 $\mu$m or less. Standard deviation of particle diameters are 15 $\mu$m or less. Content of the plant fine powders is less than 50 wt%.

## Description

TECHNICAL FIELD

The present invention relates to thermoplastic resin compositions. More particularly, the present invention relates to thermoplastic resin compositions that are capable of reducing warpage of an injection-molded article made of the compositions.

BACKGROUND ART

Injection-molded articles made of thermoplastic resins have been used in various fields including fields of automotive parts, electric equipment parts and domestic articles. However, the molded articles formed only by thermoplastic resins do not have sufficient mechanical properties for parts that require high rigidity (flexural strength) or other such properties. Because of this situation, fiber reinforced plastics (FRP) in which reinforcement fibers are blended with thermoplastic resins have been developed. However, the molded articles made of the fiber reinforced plastics were subject to "warpage" due to anisotropic nature of the reinforcement fibers. This problem was particularly noticeable in the larger and thinner molded articles.

Various techniques for reducing the warpage of the injection-molded articles made of such thermoplastic resins have been developed. For example, in JP7-41612A, an additive made of zinc stearate is added to given thermoplastic resins in an amount of 0.01-2 parts by weight. The document describes that the additive can increase fluidity of the thermoplastic resins, so as to reduce warpage of injection-molded articles made of the thermoplastic resins. In JP11-228842A, 35-85 wt% of thermoplastic resins is combined with 5-50 wt% of reinforcement fibers having a weight-average fiber length of 3-150 mm, 5-25 wt% of glass flakes and 5-25 wt% of thermoplastic elastomers. In JP62-132962A, thermoplastic resins are combined with 1-60 wt% of mica having an average particle diameter of 0.5-20 micrometers and aspect ratio of 10. In JP2010-138337A, given polypropylene resins are combined with 50 wt% or more of pulverized wood powders that are capable of passing a 15 mesh (about 1.5 mm in sieve opening) sieve and are incapable of passing a 40 mesh (about 0.40 mm in sieve opening) sieve.

SUMMARY OF THE INVENTION

However, as described in JP7-41612A, when the additive is used in order to increase the fluidity of the thermoplastic resins, the injection-molded articles made of the thermoplastic resins may have reduced rigidity although the warpage of the molded articles can be effectively reduced. Conversely, as described in JP11-228842A and JP62-132962A, the glass flakes and mica, high-density inorganic substances, may contribute to reduction of warpage and improvement of rigidity of injection-molded articles. However, the molded articles may be increased in weight.

Further, in JP2010-138337A, the wood powders having a density lower than the inorganic substances such as glass or other such substances is used. The wood powders may be useful to prevent the injection-molded articles from increasing in weight. However, in JP2010-138337A, whole pulverized wood powders are used as the wood powder. The whole pulverized wood powders may have wide particle size distributions so as to be highly variable in particle diameter (fiber length). Thus, bad effects caused by anisotropic nature of reinforcement fibers may be suspected as before. Further, the whole pulverized wood powders may be highly variable in function thereof. As a result, a problem with regard to a warpage inhibitive effect still exists.

Thus, there is a need in the art to provide an improved thermoplastic resin composition.

In one aspect of the present invention, a thermoplastic resin composition of the present invention may contain plant fine powders that are kicked up when a plant is pulverized and not whole pulverized products that are produced by pulverization of the plant. In other words, the thermoplastic resin composition may contain at least a plant, in which the contained plant consists of plant fine powders that are kicked up when the plant is pulverized. Such plant fine powders may have an average particle diameter of 20 $\mu$m or less. Further, standard deviation of particle diameters are 15 $\mu$m or less.

In the thermoplastic resin composition, thermoplastic resins are combined with the plant having a density lower than inorganic substances such as glass, minerals or other such substances. Therefore, a density of the thermoplastic resin composition can be prevented from being excessively increased. As a result, an injection-molded article made of the compositions can be prevented from being increased in weight. Further, the plant fine powders that are kicked up when the plant is pulverized may be fine relative to the whole pulverized products of the plant and have narrow particle size distributions. Therefore, the plant fine powders can be homogenized in function thereof. As a result, the warpage of the injection-molded article can be surely reduced while good rigidity of the article can be ensured.

Content of the plant fine powders in the thermoplastic resin composition may preferably be less than 50 wt%. Further, the present invention may provide an injection-molded article that is formed by injection molding of the above-described thermoplastic rein composition.

According to the thermoplastic resin composition, it is possible to ensure good rigidity of the injection-molded article made of the composition without increasing weight of the article and to reduce the warpage of the injection-molded article.

In another aspect of the present invention, the present invention relates to a resin molded product (an injection-molded article) formed by injection molding and containing thermoplastic resins, glass fibers and plant fibers.

Resin molded products of which the rigidity is increased by containing glass fibers therein is widely known as fiber reinforced plastics. JP2011-195615A teaches fiber reinforced plastics that contain both rigid glass fibers and plant fibers softer than the glass fibers as reinforcement fibers, so as to be increased in not only rigidity but toughness. The plant fibers, when mixed with resins, can be easily entangled in a screw or clumped due to softness thereof. Therefore, in JP2011-195615A, fiber lengths of the plant fibers are limited to 5 mm or less such that the plant fibers can be prevented from being entangled or clumped. As a result, the resin molded products can be formed by injection molding. This may lead to increase of mass-productivity.

The glass fibers, when contained in the resins, may effective for not only reinforcement of a molded product made of the resins but also improvement in thermostability of the molded product. This is because the glass fibers are rigid inorganic materials. However, because of rigidity of the glass fibers, a mold is liable to wear at the time of the injection molding as content of the glass fibers is increased. Therefore, it is preferable that the content of the glass fibers is minimized. Further, in view of a recent rising demand for earth environmental protection, it is not preferable that a large amount of the glass fibers, the inorganic materials, are contained in the resins. Therefore, it is preferable that the glass fibers can effectively produce a reinforcement effect and a thermostability improvement effect while the content of the glass fibers is minimized. However, in JP2011-195615A, because soft fibers such as the plant fibers are contained in the resins in addition to the glass fibers, increased resistance can be generated at the time of mixing. Thus, the glass fibers are liable to fracture. As a result, the glass fibers cannot effectively achieve the reinforcement effect. Further, when the glass fibers are contained in the resins, the molded product is subject to warpage when the molded product is molded by the resins. In particular, the warpage of the molded product tends to be increased as the content of the glass fibers is reduced. This is not considered in JP2011-195615A.

On the other hand, JP7-212050A teaches a resin molded product including only the glass fibers only as the reinforcement fibers and formed by injection molding. In JP7-212050A, in order to reduce the warpage of the resin molded product shaped into plate-shape, the glass fibers are limited to 50-800 $\mu$m in length and a certain amount of glass beads having diameters of 10-100 $\mu$m are added. JP7-212050A shows that because the spherical non-anisotropic glass beads are added, the glass fibers can be prevented from being oriented, so that a problem regarding the warpage can be eliminated.

However, in JP7-212050A, because hard inorganic materials such as the glass beads are added to resins in order to reduce the warpage of the molded product, a mold can be extremely worn when the resins are shaped by injection molding. Further, content of the inorganic materials in the resins may be increased. This is not preferable in terms of environmental protection. In addition, because each of the glass beads has a spherical shape, the glass beads may not have a reinforcement effect.

Thus, there is a need in the art to provide an improved resin molded product.

In the present invention, a resin molded product may contain thermoplastic resins, glass fibers and plant fibers. Content of the glass fibers is 1-6 wt%. The plant fibers have fiber lengths of 0.3 mm or less and content of the plant fibers is 10-40 wt%.

Such a resin molded product may contain the glass fibers in sufficient quantity to effectively produce a thermostability improvement effect, in which content of the glass fibers is relatively reduced. However, in addition to the glass fibers, the plant fibers having the fiber lengths of 0.3 mm or less are contained in the resin molded product at the content rate of 10-40 wt%. Therefore, the resin molded product can be prevented from generating the warpage therein when it is molded, although its mechanism is not necessarily clear. Further, the plant fibers may inherently have a certain level of reinforcement effect. In addition, because the plant fibers have the short fiber lengths of 0.3 mm or less, the glass fibers are less subject to fracture when the glass fibers are mixed with the resin. Thus, the plant fibers allow the glass fibers to effectively produce a reinforcement effect. Further, in addition to the fact that the content of the glass fibers is relatively reduced, the naturally-derived soft plant fibers rather than inorganic materials are added in order to reduce warpage of the molded product when the molded product is molded. This may reduce loads on an earth environment. Also, a mold can be prevented from wearing.

Such a resin molded product may preferably be formed by mixing the thermoplastic resins and the plant fibers and then shaping a mixture by injection molding while the glass fibers are mixed therewith without kneading. According to such a method, the glass fibers are further less subject to fracture when they are mixed with the resin. Thus, the glass fibers can effectively exert the reinforcement effect.

According to the present invention, the reinforcement effect and the thermostability improvement effect can be effectively produced in the resin molded product formed by injection molding. In addition, the resin molded product can be prevented from generating the warpage therein when it is molded. Such effects can be achieved with consideration for the earth environment while the mold is prevented from wearing.

BRIEF DESCRIPTION OF THE DRAWINGS

FIG. 1 is a set of graphs which shows particle size distributions of plant pulverized products and plant fine powders according to Embodiment 1.
FIG. 2 is a set of graphs which shows results of Test 4 according to Embodiment 2, in which relationships between content rate of glass fibers and plant fibers and heat deflection temperatures is shown.

MODE FOR CARRYING OUT THE INVENTION

In the following, representative embodiments of the present invention will be described in detail.

[Embodiment 1]

Thermoplastic resin compositions of the present invention may be composed of thermoplastic resins as a base and plant fine powders added to the resins.

(Thermoplastic Resins)

The thermoplastic resins as the base may include known resins that are generally used for injection molding. For example, the resins may be, but are not limited to, one or more member selected from the group consisting of polyolefin resins such as polypropylene and polyethylene; polyamide resins such as nylon 6 and nylon 6,6; polyvinyl chloride resins; polystyrene resins; polyester resins such as polyethylene terephthalate; polyacetal resins such as polybutylene terephthalate; and polycarbonate resins. In particular, the polyolefin resins are preferable in view of physical properties and prices. The polyolefin resins may be homopolymers of ethylene, propylene, butene, 4-methylpentene or other such monomers, copolymers thereof, and modified polypropylene such as acrylic acid and maleic anhydride. When polyethylene is used, it is desirable to select low density polyethylene having specific gravity of about 0.91-0.92, more preferably ultralow density polyethylene having the specific gravity of 0.90 or less. Polypropylene has the lowest specific gravity in general-purpose resins and has properties such as high strength, non-hygroscopicity and excellent chemical resistance. Therefore, polypropylene is more preferable in the exemplified thermoplastic resins. Polypropylene has melt flow rate (MFR) of about 40-100 g/10 min.

(Plant Fine Powders)

Plants for the plant fine powders are not limited to special plants provided that they are natural plants classified into arboreous species and herbaceous species. Examples of the arboreous species are needle-leaf trees such as cedar and hinoki cypress; broad-leaf trees such as beech, persimmon and cherry; and tropical trees. Preferred examples of the herbaceous species are bast plants rich in high-quality fibers. Examples of the bast plants are kenaf, ramie (mao), linen (flax), abaca (Manila hemp), henequen (sisal hemp), jute (jute), hemp (hemp), palm, palm, paper mulberry, straw and bagasse. The plant fine powders obtained from these plants can be used independently or in various combinations.

The plant fine powders may be obtained by collecting powders that are kicked up when the plants as raw materials are pulverized. Pulverization methods of the plants are not limited to particular methods. That is, the plants can be pulverized using a known pulverization machine or can be beaten and pulverized with a hammer or other such tools. The most effective collecting method of the plant fine powders is to use a cyclonic collecting device that is integrally attached to (unitized with) the pulverization machine. However, the plant fine powders can be collected by blowing the same using wind power or by trapping the same using a net.

The plant fine powders thus obtained, i.e., the powders kicked up into the atmosphere, may inherently have small particle diameters and narrow particle size distributions. In particular, the plant fine powders may have an average particle diameter of 20 $\mu$m or less, preferably 15 $\mu$m or less, more preferably 10 $\mu$m or less. Further, standard deviation (variations) of particle diameters may be 15 $\mu$m or less, preferably 10 $\mu$m or less.

Content of the plant fine powders in the thermoplastic resin compositions may be at least less than 50 wt%, preferably 40 wt% or less, more preferably 35 wt% or less. If the content of the plant fine powders is 50 wt% or more, fluidity of the thermoplastic resin compositions may be reduced. As a result, formability of the compositions can be reduced. In addition, injection molded articles made of the compositions may have a roughened surface. This may lead to inferior appearance and increased hygroscopicity of the molded articles. Conversely, a lower limit of the content of the plant fine powders in the thermoplastic resin compositions may be 5 wt% or more, preferably 10 wt% or more, more preferably 15 wt% or more. When the content of the plant fine powders is less than 5 wt%, the plant fine powders cannot sufficiently achieve beneficial effects, so that a warpage inhibitive effect of the injection molded articles can be reduced.

The thermoplastic resins and the plant fine powders can be mixed using known methods. For example, they can be mechanically mixed using a V-shaped blender, a ribbon blender, a Henschel mixer or other such devices. Further, they can be melt-mixed using an extruding machine, a Banbury mixer, a kneader, a heated roll or other such devices. Further, a melt-mixing method using a single or twin screw extruder may be the most preferable method in terms of productivity.

Further, additives can be added to the thermoplastic resin compositions as necessary without reducing the effects of the present invention. The additives may be known additives that are generally added to injection molded articles made of this kind of resin compositions. Examples of such additives are an antioxidizing agent, a light stabilizer, an ultraviolet absorbing agent, a plasticizer, a lubricant agent, an antiblocking agent, an antistatic agent, an antifogging agent, a nucleating agent, a transparentizing agent, an organic or inorganic filler, a coloring agent, organic peroxide or other such agents.

(Injection Molded Article)

Injection molded articles may be obtained by shaping the thermoplastic resin compositions into desired shapes using known injection molding method. Examples of the injection molded articles are structural parts for automobiles, electric equipments or other such devices; mechanism elements; and exterior components as well as architectural materials and domestic articles.

Examples of the present invention will now be described. Needless to say, the following examples should not be construed as limitations of the invention.

(Determination of Particle Size Distributions)

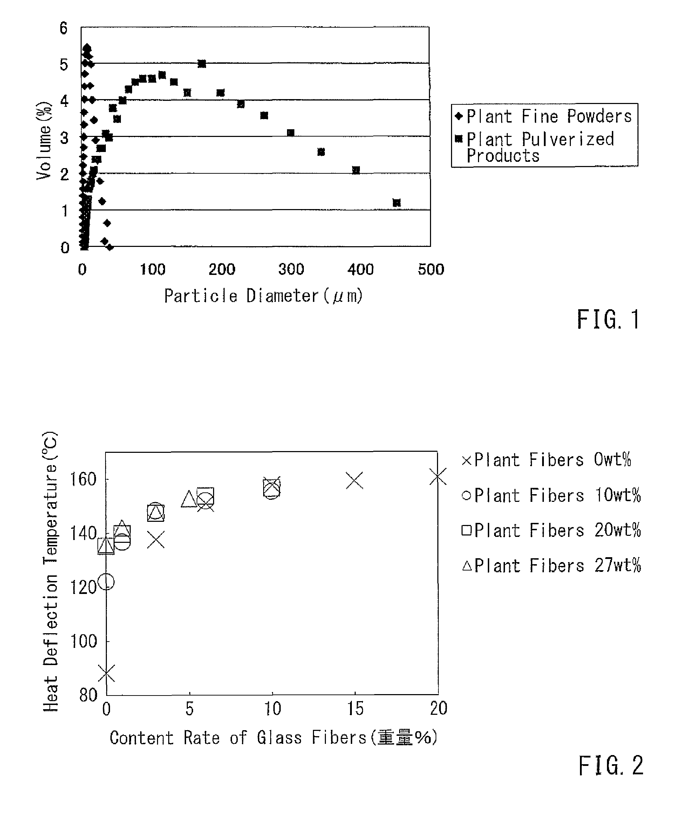

First, particle size distributions were determined with respect to both whole pulverized products that are produced by pulverization of the plants and plant fine powders that are kicked up into the atmosphere at the time of the pulverization. In particular, cedar was selected as the plants and was manually beaten and sufficiently pulverized with a hammer. Thereafter, particle diameters of the obtained whole pulverized products and the kicked up fine powders were respectively determined. Results are shown in FIG. 1. These results show that the whole pulverized products have an average particle diameter of 100 $\mu$ m, standard deviation of 104 $\mu$m, and a particle diameter range of 3-500 $\mu$m, whereas the plant fine powders have an average particle diameter of 7 $\mu$m, standard deviation of 7 $\mu$m, and a particle diameter range of 0.6-40 $\mu$m. This demonstrates that the kicked up plant fine powders may have smaller particle diameters and narrower particle size distributions (smaller variations in particle diameter) than the whole pulverized products.

(Example 1)

Next, the plant fine powders that were used to determine the particle size distributions thereof were used in order to form the injection molded articles. Polypropylene having the melt flow rate (MFR) of 30 g/10 min was selected as the thermoplastic resins. The polypropylene and the plant fine powders were melt-mixed under a temperature of 150-220°C using the extruding machine, so as to produce the thermoplastic resin compositions. Further, the content of the plant fine powders in the thermoplastic resin compositions was adjusted to 20 wt%. The thermoplastic resin compositions thus produced were shaped by injection molding under a molding condition of 170-220°C and a mold temperature of 40 $\pm$ 20°C, so as to form footrest plates, parts for electric wheelchairs, each having a width of 350 mm, a depth of 150 mm, a height of 40 mm and a plate thickness of 3 mm.

(Example 2)

Footrest plates were formed in the same manner as Example 1 except that the content of the plant fine powders in the thermoplastic resin compositions was adjusted to 30 wt%.

(Control 1)

Footrest plates were formed in the same manner as Example 1 except that the plant pulverized products that were used to determine the particle size distributions thereof were used instead of the plant fine powders and content rate thereof in the thermoplastic resin compositions was adjusted to 20 wt%.

(Control 2)

Footrest plates were formed in the same manner as Control 1 except that the content of the plant pulverized products in the thermoplastic resin compositions was adjusted to 30 wt%.

(Control 3)

Footrest plates were formed in the same manner as Control 2 except that high-fluidity polypropylene having the melt flow rate of 70 ± 10 g/10 min was used as the thermoplastic resins.

(Control 4)

Footrest plates were formed in the same manner as Example 1 except that talc having particle diameters of 10 $\mu$m or less was used instead of the plant fine powders and that content rate of the talc was 30 wt%.

(Control 5)

Footrest plates were formed in the same manner as Example 1 except that glass fibers having fiber lengths of 1-2 mm were used instead of the plant fine powders and that content rate of the glass fibers was 30 wt%.

Warpage and densities were determined with respect to the footrest plates of the examples and the controls thus formed. Further, "the warpage" was measured by a dimensional accuracy determination method using a determination device. "The densities" were determined by a water replacement method based on ISO 1183 under a test environment of 23 ± 2°C and a water temperature of 23°C. Further, the thermoplastic resin compositions used in the examples and the controls were respectively shaped under the same molding condition, so as to form test pieces that are used for determination of bending elastic modulus. Rigidity (bending elastic modulus) of the test pieces was determined. "The rigidity (the bending elastic modulus)" of each of the test pieces was determined based on ISO 174 under a test environment of 23 ± 2°C, a distance between supporting points of 64 mm and a bending speed of 2 mm/min. Further, dimensions of each of the test pieces were 80 mm × 10 mm × 4 mm. Results are shown in Table 1.

Table1

| | | Example 1 | Example 2 | Control 1 | Control 2 | Control 3 | Control 4 | Control 5 |
|---|---|---|---|---|---|---|---|---|
| Thermoplastic Resin | | Polypropylene | Polypropylene | Polypropylene | Polypropylene | High Fluidity Polypropylene | Polypropylene | Polypropylene |
| Additive Substance | Type | Plant Fine Powders | Plant Fine Powders | Plant Pulverized Products | Plant Pulverized Products | Plant Pulverized Products | Talc | Glass Fibers |
| | Particle Diameter | Average Particle Diameter 7 $\mu m$ Standard Deviation 7 $\mu m$ | Average Particle Diameter 7 $\mu m$ Standard Deviation 7 $\mu m$ | Average Particle Diameter 100$\mu m$ Standard Deviation 104$\mu m$ | Average Particle Diameter 100$\mu m$ Standard Deviation 104$\mu m$ | Average Particle Diameter 100$\mu m$ Standard Deviation 104$\mu m$ | $\leqq 10\ \mu m$ | 1~2mm |
| | Content (wt%) | 20 | 30 | 20 | 30 | 30 | 30 | 30 |
| Warpage (mm) | | 1.0 | 1.5 | 2.0 | 2.3 | 1.8 | 1.0 | 3.0 |
| Density | | 0.98 | 1.02 | 0.98 | 1.02 | 1.02 | 1.12 | 1.12 |
| Bending Elastic Modulus (Mpa) | | 1852 | 2351 | 1962 | 2550 | 2094 | 2797 | 4909 |

The results shown in Table 1 demonstrate that in Examples 1 and 2 in which the plant fine powders kicked up at the time of the pulverization are used, the warpage of the injection-molded articles can be reliably reduced while lightness and excellent rigidity of the article can be ensured. In particular, when the articles of Example 1 and Control 1 which respectively contain additive substances at content rate of 20 wt% are compared, the warpage of the article of Control 1 is twice larger than Example 1 although the articles of Example 1 and Control 1 are substantially identical with each other in density and rigidity. Further, even when the articles of Example 2 and Control 2 each of which contain the additive substances at the content rate of 30 wt% are compared, the warpage of the articles of Control 2 is considerably larger than Example 2 although the articles of Example 2 and Control 2 are substantially identical with each other in density and rigidity. Also, in the articles of Control 3 which contain the additive substances at the same content rate of 30 wt% as the Control 2, the warpage of the articles is slightly reduced because the fluidity of the thermoplastic resin compositions is increased. However, the articles of Control 3 does not have a warpage inhibitive effect equivalent to the articles of Example 2. In addition, the articles of Control 3 is reduced in rigidity compared with the articles of Example 2 because the fluidity of the thermoplastic resin compositions is increased. Further, in the articles of Control 4 in which talc is used, the warpage of the articles can be controlled while the good rigidity of the articles can be ensured. However, the articles of Control 4 have a high density, so as to be increased in weight. Further, the articles of Control 5 in which the glass fibers are added have an extremely-high rigidity enhancement function. However, the articles of Control 5 have a high density. In addition, the warpage of the articles of Control 5 is extremely increased.

[Embodiment 2]

Resin molded products (which may be hereinafter simply referred to as molded products) of the present invention may contain thermoplastic resins as main constituent materials, in which the thermoplastic resins are reinforced by fibers. The thermoplastic resins may contain glass fibers and plant fibers as the fibers.

Examples of the thermoplastic resins are polypropylene, polyethylene, polyvinyl chloride, polystyrene, ABS resins, methacryl resins, polyamide, polyester, polycarbonate, and polyacetal. These thermoplastic resins can be used independently or in various combinations.

The glass fibers may primarily contribute to reinforcement of the resin molded products and improvement in thermostability of the products. The glass fibers are added to the resin molded products at content rate of 1-6 wt%. When the content rate of the glass fibers falls within the range, thermostability of the products can be effectively increased. Even if the glass fibers are added at the content rate of more than 6 wt%, an additional thermostability improvement effect cannot be obtained. This may lead to inefficiency. To the contrary, if the content rate of the glass fibers is less than 1 wt%, both a thermostability improvement effect and a reinforcement effect cannot be sufficiently achieved. It is preferable that the glass fibers mixed with the resins have fiber lengths not less than 1 mm and not greater than 5 mm. When the fiber lengths are less than 1 mm, the glass fibers cannot effectively exert the reinforcement effect. To the contrary, when the fiber lengths are greater than 5 mm, the glass fibers mixed with the resins are liable to fracture at the time of injection molding. As a result, the reinforcement effect cannot be effectively obtained.

The plant fibers may function to prevent the resin molded products from warping when the resin molded products are molded and may function to assist the reinforcement of the molded products. Examples of the plant fibers are bast fibers such as ramie, kenaf, linen, hemp and jute; vein fibers such as Manila hemp, sisal hemp and pineapple; leafstalk fibers such as Manila hemp and banana; fruit fibers such as coconut palm; seed hair fibers such as cotton and kapok; and wood fibers. The bast fibers, the vein fibers, the leafstalk fibers, the fruit fibers and the seed hair fibers may preferably be used in a condition in which they are isolated from plants and are then refined by cutting or pulverization. The wood fibers can be used in a condition in which they are isolated from wood, i.e., as refined wood pulp, or in a condition in which they are refined without isolated from the wood (so-called wood powders). These plant fibers can be used independently or in various combinations.

The plant fibers may have fiber lengths of 0.3 mm or less. When the fiber lengths are greater than 0.3 mm, increased mixing resistance can be generated when the plant fibers are mixed with the thermoplastic resins together with the glass fibers, so that the glass fibers are liable to fracture. As a result, the reinforcement effect by the glass fibers cannot be effectively achieved. When the fiber lengths are 0.3 mm or less, the glass fibers are less subject to fracture. Therefore, the glass fibers can be maintained in the molded products without any change in length. As a result, the reinforcement effect by the glass fibers can be efficiently achieved, so that the resin molded products can be effectively reinforced. Further, when the fiber lengths of the plant fibers are in a range of 0.3 mm or less, the plant fibers can effectively exert the reinforcement effect as the fiber lengths are increased. On the other hand, because the glass fibers are less subject to fracture as the fiber lengths of the plant fibers are decreased, the glass fibers can effectively exert the reinforcement effect. Thus, a lower limit of the fiber lengths of the plant fibers is not set in this embodiment. Therefore, the plant fibers may be of a substantially powder form having the fiber lengths of tens of micrometers.

Content of the plant fibers in the resin molded products may be 10-40 wt%. In a case that the glass fibers are added to the resin molded products at the content rate of 1-6 wt%, when content rate of the plant fibers having the fiber lengths of 3 mm or less is 10 wt% or more, the resin molded products can be prevented from generating warpage therein when the molded products are molded. It is preferable that the content rate of the plant fibers is 20 wt% or more, because the warpage of the resin molded products can be further reduced. Further, when the content rate of the plant fibers is in a range of 40 wt% or less, the reinforcement effect by the plant fibers can be increased as the content rate of the plant fibers is increased. However, even if the plant fibers are added at the content rate of more than 40 wt%, an additional reinforcement effect cannot be obtained. It is considered that this is because the glass fibers are liable to fracture due to fiber congestion in the molded products, so that a reinforcement efficiency by the glass fibers can be reduced. In addition, because the content of the fibers in the resin molded products can be excessively increased, the molded products may have a reduced surface smoothness. As a result, the molded products may have a rough feel and an inferior appearance.

Further, various types of additives can be added to the resin molded products without reducing the effects of the present invention. Examples of the additives are a pigment, a dyestuff, a dispersant, a stabilizing agent, a plasticizer, a reforming agent, an ultraviolet absorbing agent, a light stabilizer, an antioxidizing agent, an antistatic agent, a lubricant agent and a mold release agent.

The resin molded products of the present invention may be molded by injection molding of the thermoplastic resins with which the fibers are mixed. The molded products may preferably be molded via a mixing step in which the thermoplastic resins and the plant fibers are mixed and a molding step in which a mixture of the thermoplastic resins and the plant fibers obtained in the mixing step is shaped while the glass fibers are mixed therewith without kneading. Because the molded products may be molded while the glass fibers are added thereto without kneading, the glass fibers are less subject to fracture when the molded products are molded. Thus, the reinforcement effect by the glass fibers can be effectively achieved.

(Mixing Step)

In the mixing step, the plant fibers are forcibly kneaded into the thermoplastic resins while positively applying a shearing force to the resins using a screw extruder, so as to be uniformly dispersed thereinto. Thus, pellets can be produced. A shape of a screw of the screw extruder is not limited. However, it is preferred that the screw has a portion that is capable of transferring raw materials forward, a portion that is capable of applying a high shearing force to the resins and mixing the same, and a portion that is capable of extruding a desired amount of the mixed resins. For example, the screw of which the mixing portion has a ninja star-shape may be advantageously used because such a shape may generate a strong mixing function.

(Molding Step)

Next, a mixture material of the plant fiber-containing thermoplastic resin pellets obtained in the mixing step and the glass fibers is fed into an injection molding machine, so as to mold the resin molded products without kneading. Further, it is preferable that the glass fibers are used in a form of a masterbatch. In order to form the masterbatch of the glass fibers, for example, elongated glass fibers are continuously drawn out and are simultaneously impregnating with molten resins, so as to form elongated resin-impregnated glass fibers without kneading. The elongated resin-impregnated glass fibers are then cut to a suitable length. Thus, the masterbatch of the glass fibers may be formed. It is preferable that the injection molding machine is configured such that the material can be plasticized by a screw, i.e., such that the fed mixture material can be melted (plasticized) while it is transferred within a heating cylinder by the screw. The reason is that in such an injection molding machine, injection and plasticization can be simultaneously performed. However, because the screw of the injection molding machine is intended to transfer the mixture material and not to knead the same, a single screw having a normal helix direction may be used.

According to the resin molded products of the present invention, the reinforcement function by the glass fibers and the plant fibers can be effectively achieved. Naturally, because the resin molded products may be molded by injection molding, the resin molded products may have a high productivity and may be formed into various complicated shapes. In addition, when the resin molded products have a plate shape, the resin molded products can be prevented from generating the warpage therein. Therefore, the resin molded products can be formed as various plate-shaped members. For example, the resin molded products can be formed as various vehicle components (interior components and exterior components) each having a desired shape.

(Test 1)

First, in Test 1, test pieces 1-1 to 1-15 of the resin molded products were formed using following materials each of which has composition shown in Table 2. In order to form the test pieces, the materials were shaped into rectangular plate shapes (50 mm × 55 mm × thickness 1.0 mm) by injection molding via the mixing step and the molding step described above in sequence. In the mixing step, the pellets of the thermoplastic resins into which the plant fibers are kneaded were produced using a twin-screw extruder (KZW15-30TGN manufactured by Technovel). In the molding step, the pellets obtained in the mixing step and the masterbatch of the glass fibers were mixed and then were shaped by injection molding without kneading the materials using a commonly used injection molding machine (E-185 manufactured by Sumitomo Heavy Industries, Ltd.). Next, the warpage of the obtained test pieces were evaluated by a method described below. Results are also shown in Table 2.

<Materials>

Thermoplastic Resins: Polypropylene Resins (AZ864 manufactured by Sumitomo Chemical Company, Limited)
Glass Fibers: Fiber Diameter of 22 $\mu$m; Fiber Length of 5 mm
Plant Fibers: Ramie Fibers (defibrated and cut after isolated from plants) Fiber Length of 0.3 mm

<Evaluation of Warpage>

The test pieces were positioned on a flat top panel of a test bench such that plate surfaces of the test pieces face the top panel. In a condition in which three corners of each of the rectangular test pieces contacted the top panel, a lifting distance (mm) of a remaining corner of each of the test pieces from the top panel was determined.

Table 2

| Test Piece | Content Rate of Glass Fibers in Resin Molded Products (wt%) | Content Rate of Plant Fibers in Resin Molded Products (wt%) | Evaluation Result of Warpage/Lifting Distance (mm) |
|---|---|---|---|
| 1-1 | 0 | 0 | 0.0 |
| 1-2 | 3 | 0 | 7.3 |
| 1-3 | 3 | 10 | 1.8 |
| 1-4 | 3 | 20 | 1.0 |
| 1-5 | 3 | 27 | 0.6 |
| 1-6 | 6 | 0 | 8.7 |
| 1-7 | 6 | 10 | 1.7 |
| 1-8 | 6 | 20 | 1.0 |
| 1-9 | 10 | 0 | 7.8 |
| 1-10 | 10 | 10 | 2.0 |
| 1-11 | 10 | 20 | 1.2 |
| 1-12 | 15 | 0 | 5.8 |
| 1-13 | 15 | 15 | 4.6 |
| 1-14 | 20 | 0 | 4.9 |
| 1-15 | 20 | 20 | 6.1 |

When comparison is made between the test piece (1-1) that does not contain the fibers and the test pieces (1-2, 1-6, 1-9, 1-12, 1-14) that contain only the glass fibers, it is found that the glass fibers may cause the warpage of the plate-shaped resin molded products. In particular, when the content rate of the glass fibers is 10 wt% or less, a degree of the warpage can be increased. To the contrary, when comparison is made between the test pieces that contain only the glass fibers and the test pieces (1-3, 1-4, 1-5, 1-7, 1-8, 1-10, 1-11, 1-13, 1-15) that contain both the glass fibers and the plant fibers, it is found that when the content rate of the glass fibers is 15 wt% or less and the plant fibers are additionally contained, the warpage of the products can be reduced. Further, it is found that when the resin molded products contain the glass fibers at the content rate of 10 wt% or less and additionally contain the plant fibers at the content rate of 10 wt% or more, a warpage reduction effect can be specifically effectively achieved, so that the warpage of the products can be reduced. In particular, when the content rate of the plant fibers is 20 wt% or more, the degree of the warpage can be further reduced.

(Test 2)

In Test 2, first, test pieces 2-1 to 2-5 of the resin molded products were formed using the same materials as Test 1 while the fiber lengths of the plant fibers were variously changed as shown in Table 3. Further, the content rate of the glass fibers and the content rate of the plant fibers in the test pieces were respectively 5 wt% and 10 wt%. The test pieces were formed as plate-shaped members of 80 mm × 10 mm × 4 mm by injection molding via the same steps as Test 1. Next, with regard to the test pieces as formed, the fiber lengths of each of the fibers contained in the resin molded products were measured. Further, a fiber-length retention rate was calculated using a following equation:

$$[\text{Fiber-Length Retention Rate (\%)} = \text{Fiber Lengths of Fibers fed in Molding Step (Fed Fiber Lengths)} \div \text{Fiber Lengths of Fibers in Resin Molded Products (Retained Fiber Lengths)} \times 100]$$

Further, bending strength of each of the test pieces was determined based on ISO 178. Results are also shown in Table 3.

Table 3

| Test Piece | Fed Fiber Length (mm) | | Retained Fiber Length (mm) | | Fiber-Length Retention Rate (%) | | Bending Strength (MPa) |
|---|---|---|---|---|---|---|---|
| | Plant Fibers | Glass Fibers | Plant Fibers | Glass Fibers | Plant Fibers | Glass Fibers | |
| 2-1 | 0.3 | 5 | 0.23 | 1.89 | 75.2 | 37.8 | 56.0 |
| 2-2 | 1 | 5 | 0.50 | 1.50 | 50.1 | 29.9 | 52.7 |
| 2-3 | 3 | 5 | 1.36 | 1.11 | 45.3 | 22.2 | 50.0 |
| 2-4 | 5 | 5 | 1.91 | 0.89 | 38.2 | 17.7 | 53.7 |
| 2-5 | 10 | 5 | 2.47 | 0.54 | 24.7 | 10.8 | 50.6 |

The results of Test 2 demonstrate that both the glass fibers and the plant fibers may have a high fiber-length retention rate as the fiber lengths of the plant fibers fed in the molding step (the fed fiber lengths) is reduced, and that when the fed fiber lengths of the plant fibers are 0.3 mm or less, the reinforcement effect of the resin molded products can be effectively achieved.

(Test 3)

In Test 3, similar to Test 2, test pieces 3-1 to 3-4 of the resin molded products were formed using the same materials as Test 1 except that composition of each of the materials is shown in Table 4. With regard to the test pieces as formed, similar to Test 2, bending strength of each of the test pieces was determined. Results are also shown in Table 4.

Table 4

| Test Piece | Content Rate of Glass Fibers in Resin Molded Products (wt%) | Content Rate of Plant Fibers in Resin Molded Products (wt%) | Bending Strength (MPa) |
|---|---|---|---|
| 3-1 | 20 | 6 | 48.5 |
| 3-2 | 30 | 6 | 51.8 |
| 3-3 | 40 | 6 | 54.5 |
| 3-4 | 50 | 6 | 54.4 |

The results of Test 3 demonstrate that although the reinforcement effect of the resin molded products can be increased as the content rate of the plant fibers is increased until the content rate reaches 40 wt%, even if the plant fibers are added at the content rate of more than 40 wt%, an additional reinforcement effect cannot be obtained. This demonstrates that preferred content rate of the plant fibers is 40 wt% or less.

(Test 4)

In Test 4, test pieces of the resin molded products were formed using the same materials as Test 1 while the content rate of each of the glass fibers and the plant fibers was variously changed. The test pieces were formed as plate-shaped members of 80 mm × 10 mm × 4 mm by injection molding via the same steps as Test 1. With regard to the test pieces as formed, heat deflection temperatures were measured using a following method. Results are shown in FIG. 2 in a graphic form.

<Measuring Method of Heat Deflection Temperatures>

The heat deflection temperatures were measured based on ISO 75-2 under the following conditions using a heat deflection temperature testing machine (No. 148-HD-PC6) manufactured by Yasuda Seiki Seisakusho, Ltd.

Bending Stress: 0.45 MPa
Distance between Supporting Points: 64 mm
Initiation Temperature: 40 °C
Rate of Temperature Increase: 120 °C/H

As will be apparent from the results of FIG. 2, although the thermostability of the resin molded products can be increased as the content rate of the glass fibers is increased until the content rate of the glass fibers reaches 6 wt%, the thermostability improvement effect cannot be increased thereafter. This demonstrates that the thermostability improvement effect can be efficiently achieved when the content rate of the glass fibers is 6 wt% or less.

**Claims**

1. A thermoplastic resin composition comprising plant fine powders that are kicked up when a plant is pulverized.

2. The thermoplastic resin composition as define in claim 1, wherein the plant fine powders have an average particle diameter of 20 $\mu$m or less, and wherein standard deviation of particle diameters are 15 $\mu$m or less.

3. The thermoplastic resin composition as define in claim 1 or 2, wherein content of the plant fine powders is less than 50 wt%.

4. An injection-molded article that is formed by injection molding of the thermoplastic rein composition as defined in any one of claims 1 to 3.

5. A resin molded product comprising:

thermoplastic resins,
glass fibers, and
plant fibers,
wherein content of the glass fibers is 1-6 wt%, and
wherein the plant fibers have fiber lengths of 0.3 mm or less and content of the plant fibers is 10-40 wt%.

6. The resin molded product as define in claim 5, wherein the resin molded product is formed by mixing the thermoplastic resins and the plant fibers and then shaping a mixture by injection molding while the glass fibers are mixed therewith without kneading.

...

FIG. 1

FIG. 2

<table>
<tr><td colspan="2" align="center"><b>INTERNATIONAL SEARCH REPORT</b></td><td>International application No.<br><br>PCT/JP2013/064058</td></tr>
</table>

A. CLASSIFICATION OF SUBJECT MATTER
*C08L101/00*(2006.01)i, *C08J3/12*(2006.01)i, *C08J5/04*(2006.01)i, *C08K7/14*(2006.01)i, *C08L97/00*(2006.01)i

According to International Patent Classification (IPC) or to both national classification and IPC

B. FIELDS SEARCHED

Minimum documentation searched (classification system followed by classification symbols)
C08L101/00, C08J3/12, C08J5/04, C08K7/14, C08L97/00

Documentation searched other than minimum documentation to the extent that such documents are included in the fields searched
Jitsuyo Shinan Koho        1922-1996   Jitsuyo Shinan Toroku Koho   1996-2013
Kokai Jitsuyo Shinan Koho   1971-2013   Toroku Jitsuyo Shinan Koho   1994-2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | JP 2011-231237 A  (Daicel Polymer Ltd.),<br>17 November 2011 (17.11.2011),<br>claims; examples<br>(Family: none) | 1-4<br>5,6 |
| A | JP 2010-155970 A  (Daicel Polymer Ltd.),<br>15 July 2010 (15.07.2010),<br>entire text<br>(Family: none) | 1-6 |

☐ Further documents are listed in the continuation of Box C.          ☐ See patent family annex.

| | |
|---|---|
| *    Special categories of cited documents:<br>"A"  document defining the general state of the art which is not considered    to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>17 July, 2013 (17.07.13) | Date of mailing of the international search report<br>30 July, 2013 (30.07.13) |
|---|---|
| Name and mailing address of the ISA/<br>Japanese Patent Office | Authorized officer |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7041612 A
- JP 11228842 A
- JP 62132962 A
- JP 2010138337 A
- JP 2011195615 A
- JP 7212050 A